# EUROPÄISCHE PATENTANMELDUNG

(11) **EP 2 866 376 A1**
(43) Veröffentlichungstag der Anmeldung: **29.04.2015**
(21) Anmeldenummer: 14180947.5
(22) Anmeldetag: 14.08.2014
(51) Int. Cl.: H04L 9/08, B60L 11/18, G07F 15/00

(54) **Verfahren und Vorrichtungen zum Erzeugen eines gemeinsamen Geheimnisses**

(30) Priorität: 23.10.2013 DE 102013221492
(71) Anmelder: Siemens Aktiengesellschaft, 80333 München (DE)
(72) Erfinder: Müller, Reiner, 86971 Peiting (DE); Nagel, Robert, 81541 München (DE)

(57) **Zusammenfassung**

Verfahren zum Erzeugen eines gemeinsamen Geheimnisses (K) zwischen einem Elektrofahrzeug (1) und einer kontrollierenden Instanz (2) einer zum Aufladen des Elektrofahrzeugs (1) ausgestalteten Ladestation (3),
wobei das gemeinsame Geheimnis (K) mittels eines Datenaustauschs (8) zwischen dem Elektrofahrzeug (1) und der kontrollierenden Instanz (2) mittels eines Schlüsselaustauschprotokolls (P) erzeugt wird, welches kein weiteres gemeinsames Geheimnis zur Erzeugung des gemeinsamen Geheimnisses (K) voraussetzt.

## Beschreibung

Die vorliegende Erfindung bezieht sich auf das technische Gebiet der Sicherstellung der Kommunikationsbeziehung zwischen einem Elektrofahrzeug und einer Infrastruktur eines Ladepunktbetreibers. Vorzugsweise bezieht sich die Erfindung auch auf die dynamische Assoziierungsverfahren für die Sicherstellung einer 1-zu-1 Kommunikationsbeziehung zum Austausch von Identität und zur Authentifizierung zweier Kommunikationspartner.

Um Ladesysteme für Elektrofahrzeuge mit beispielsweise induktiver Energieübertragung benutzerfreundlich und effizient in öffentlichen Bereichen betreiben zu können, ist zunächst eine drahtlose Kommunikation zwischen dem zu ladenden Elektrofahrzeug und der kontrollierenden Instanz der Energieübertragung bereitzustellen, wobei im Folgenden beispielhaft davon ausgegangen wird, dass die kontrollierende Instanz eine Bodeneinheit ist. Zu diesem Zweck sind zwei essentielle Probleme zu lösen:

Erstes Problem: Um eine sichere Kommunikation gewährleisten zu können, werden unter anderem Verschlüsselungsalgorithmen basierend auf dem Prinzip des gemeinsamen Geheimnisses verwendet, beispielsweise mittels eines shared-key. Diese Technik der Verschlüsselung setzt jedoch voraus, dass der öffentliche Schlüssel den Kommunikationspartnern bekannt ist bzw. im Vorfeld ausgetauscht wurde.

Zweites Problem: Es muss eine eindeutige 1-zu-1 Beziehung - oder: Zuordnung - zwischen den beiden Kommunikationspartnern garantiert werden können. Erste Überlegungen bezüglich der notwendigen Ladeinfrastrukturen zeigen, dass in der überwiegenden Menge von Szenarien mehrere Ladeplätze eng beieinander liegen, analog der heute üblichen Anordnungen von Parkplätzen, beispielsweise nebeneinander und/oder hintereinander. Die Kommunikationsschnittstelle muss während der Energieübertragung zu jedem Zeitpunkt garantieren, dass das entsprechende Fahrzeug für die Ladesteuerung zu jeder Zeit mit der richtigen Bodeneinheit kommuniziert.

Zusammenfassend muss also eine Kommunikationslösung zur Verfügung gestellt werden, die inhärent eine
- eindeutige Zuordnung eines Elektrofahrzeugs zur Bodeneinheit während eines gesamten Lade-Zyklus,
- eine gesicherte und vorzugsweise verschlüsselte Punktzu-Punkt Kommunikationsverbindung der beiden Kommunikationspartner,
- eine eindeutige Identifizierung des Elektrofahrzeugs gegenüber der Bodeneinheit und
- eine eindeutige Authentifizierung des Elektrofahrzeugs für Abrechnungszwecke,
gewährleisten kann.

http://en.wikipedia.org/wiki/Diffie-Hellman key exchange beschreibt ein Verfahren zum Erzeugen eines gemeinsamen Geheimnisses zwischen zwei Kommunikationspartnern, welches kein weiteres vorab ausgemachtes gemeinsames Geheimnis benötigt. Dieses auch sogenannte Schlüsselaustauschverfahren von Diffie und Hellman ist zudem beschrieben in Diffie, W. and Hellman, M.E.: New Directions in Cryptography, in: IEEE Transactions on Information Theory. 22, Nr. 6, 1976, S. 644-654.

Bekannte Verfahren im Bereich induktiv Laden für die Identifizierung und das Pairing von Elektrofahrzeug und Bodeneinheit sind:
- (i) Übertragen einer Kennung mittels eines RFID-Tags am Elektrofahrzeug und eines RFID-Readers innerhalb der Infrastruktur. Das RFID-Tag kann auch theoretisch am Boden sein und der Reader am Fahrzeug, was aber eher unwahrscheinlich ist in der Realität;
- (ii) Übertragen einer Kennung basierend auf der NFC-Technology, was technisch ähnlich zu RFID ist, jedoch hat die NFC-Technologie eine geringere Reichweite;
- (iii) Herstellen einer bidirektionalen, räumlich allerdings sehr begrenzten, Kommunikation, basierend auf gerichteten Antennen,
- (iv) Übertragen einer eindeutigen Ladeplatz-Kennung über eine auf Induktion basierende zusätzliche Kommunikationsstrecke von der Bodeneinheit zum Elektrofahrzeug oder in umgekehrter Richtung. Dabei können Kommunikationsspulen z.B. innerhalb der Leistungsspule auf Infrastruktur- und Elektrofahrzeugseite angeordnet sein.

Alle diese Verfahren haben ihre individuellen Probleme. So ist bei den Verfahren zu (i) und (ii) eine sehr präzise Positionierung der RFID- bzw. NFC-Token an Elektrofahrzeug bzw. an der Bodeneinheit nötig. Das Verfahren zu (iii) leidet daran, dass aufgrund von Reflexion zwischen Elektrofahrzeugboden und Parkplatzfläche ein Kommunikationskanal mit einer anderen, neben der eigentlich korrekten, liegenden Bodeneinheit entstehen kann. Dieser Umstand erschwert oder verhindert zunächst die eindeutige Identifikation der jeweiligen Gegenstation. Darüber hinaus mindert dies den Durchsatz des Systems bis hin zum Verbindungsabriss, was bei einem aktiven Ladevorgang inakzeptabel ist. Die Lösung zu (iv) ist für Datenübertragung nur mit erhöhtem Aufwand verfügbar wenn gleichzeitig zur Datenübertragung Energie übertragen werden soll. Gleichzeitige Daten- und Energieübertragung ist zwar grundsätzlich möglich, selbst bidirektional, der Aufwand, die Informationen auszufiltern ist jedoch hoch. Die Spulen für die Datenübertragung hängt in einem entscheidenden Masse von der Geometrie der Leistungsspulen ab; d.h. es ist damit zu rechnen, dass die Konzepte und Realisierungen Hersteller-abhängig sein werden.

Der vorliegenden Erfindung liegt daher die Aufgabe zugrunde, die Sicherstellung der Kommunikationsbeziehung zwischen einem Elektrofahrzeug und einer Infrastruktur eines Ladepunktbetreibers zu vereinfachen.

Diese Aufgabe wird durch die in den unabhängigen Ansprüchen beschriebenen Lösungen gelöst. Bevorzugte Ausführungsformen sind in den weiteren Ansprüchen angegeben.

Gemäß einem Aspekt betrifft die Erfindung ein Verfahren zum Erzeugen eines gemeinsamen Geheimnisses zwischen einem Elektrofahrzeug und einer kontrollierenden Instanz einer zum Aufladen des Elektrofahrzeugs ausgestalteten Ladestation.
Das gemeinsame Geheimnis wird mittels Datenaustausch zwischen dem Elektrofahrzeug und der kontrollierenden Instanz mittels eines Schlüsselaustauschprotokolls erzeugt. Das Schlüsselaustauschprotokoll setzt kein weiteres gemeinsames Geheimnis zur Erzeugung des gemeinsamen Geheimnisses voraus.

Gemäß einem weiteren Aspekt betrifft die Erfindung ein Elektrofahrzeug. Das Elektrofahrzeug umfasst ein Kommunikationssystem. Das Kommunikationssystem umfasst ein Schlüsselaustauschprotokoll und eine fahrzeugseitige Schnittstelle für einen Datenaustausch mit einer kontrollierenden Instanz einer zum Aufladen des Elektrofahrzeugs ausgestalteten Ladestation. Das Schlüsselaustauschprotokoll ist ausgestaltet, ein gemeinsames Geheimnisses mit einer externen kontrollierenden Instanz zu erzeugen, ohne dass dazu ein weiteres gemeinsames Geheimnis notwendig ist.

Gemäß einem weiteren Aspekt betrifft die Erfindung eine Ladeinfrastruktur für Elektrofahrzeuge. Die Ladeinfrastruktur umfasst eine Ladestation zum Aufladen eines Elektrofahrzeugs und eine kontrollierende Instanz der Ladestation. Die kontrollierende Instanz umfasst eine infrastrukturseitige Schnittstelle und ein Schlüsselaustauschprotokoll zum Erzeugen eines gemeinsamen Geheimnisses mit dem Elektrofahrzeug. Das Schlüsselaustauschprotokoll ist so ausgestaltet, dass es kein weiteres gemeinsames Geheimnis zur Erzeugung des gemeinsamen Geheimnisses voraussetzt.

Gemäß einem weiteren Aspekt betrifft die Erfindung ein System zum Erzeugen eines gemeinsamen Geheimnisses zwischen einem Elektrofahrzeug und einer Ladeinfrastruktur. Das System umfasst eine Ladeinfrastruktur und ein Elektrofahrzeug, wie in den Ansprüchen beschrieben.

Die Erfindung wird nachfolgend anhand der Figuren beispielsweise näher erläutert. Dabei zeigen:
- Figur 1: ein System und ein Verfahren gemäß bevorzugten Ausführungsformen der Erfindung;
- Figur 2: ein Schema zur Veranschaulichung von Systemen und Verfahren gemäß bevorzugten Ausführungsformen der Erfindung.

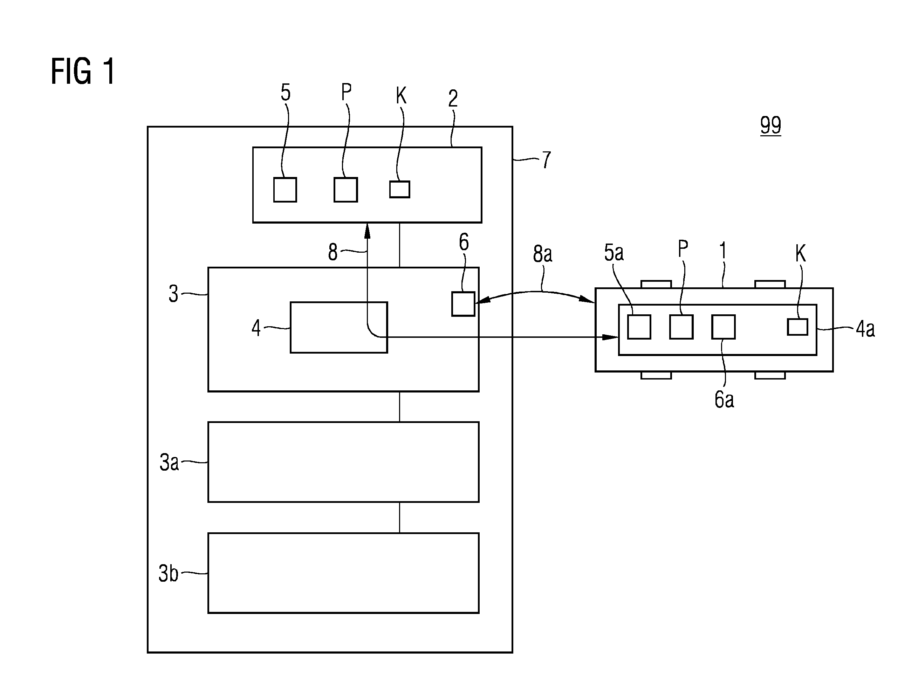

Figur 1 zeigt ein Ladesystem 99. Das Ladesystem 99 umfasst eine Ladeinfrastruktur 7 und ein Elektrofahrzeug 1.

Die Ladeinfrastruktur 7 umfasst eine Ladestation 3 zum Aufladen eines Elektrofahrzeugs 1 und eine kontrollierende Instanz 2 der Ladestation 3. Die kontrollierende Instanz 2 umfasst eine infrastrukturseitige Schnittstelle 5 und ein Schlüsselaustauschprotokoll P. Die infrastrukturseitige Schnittstelle 5 und/oder das Schlüsselaustauschprotokoll P sind ausgestaltet, ein gemeinsames Geheimnis K mit dem Elektrofahrzeug 1 zu erzeugen. Das Schlüsselaustauschprotokoll P ist ausgestaltet, dass es zum Erzeugen des gemeinsamen Geheimnisses K kein weiteres gemeinsames Geheimnis zur Erzeugung des gemeinsamen Geheimnisses K voraussetzt.

Das Elektrofahrzeug 1 umfasst ein Kommunikationssystem 4a. Das Kommunikationssystem 4a umfasst eine fahrzeugseitige Schnittstelle 5a für einen Datenaustausch 8 mit der kontrollierenden Instanz 2. Auch das Kommunikationssystem 4a umfasst das Schlüsselaustauschprotokoll P zum Erzeugen eines gemeinsamen Geheimnisses K mit der kontrollierenden Instanz 2.

Um ein gemeinsames Geheimnis K zwischen einem Elektrofahrzeug 1 und der kontrollierenden Instanz 2 zu erzeugen, wird das gemeinsame Geheimnis K mittels des Datenaustauschs 8 zwischen dem Elektrofahrzeug 1 und der kontrollierenden Instanz 2 und mittels des Schlüsselaustauschprotokolls P erzeugt.

Das Schlüsselaustauschprotokoll P ist also gemäß bevorzugten Ausführungsformen so ausgestaltet, dass zur Erzeugung des gemeinsamen Geheimnisses K keine Zertifizierungsstelle, kein öffentlicher Schlüssel, keine weitere Kommunikation mit Dritten, beispielsweise eben der Zertifizierungsstelle, notwendig ist. Vorzugsweise ist der Datenaustausch 8 eine direkte Kommunikation zwischen dem Elektrofahrzeug 1 und Ladeinfrastruktur 7.

Gemäß bevorzugten Ausführungsformen stellt das gemeinsame Geheimnis K eine eindeutige Zuordnung zwischen dem Elektrofahrzeug 1 und der Ladestation 3 sicher. Vorzugsweise wird dann die Kommunikation zwischen dem Elektrofahrzeug und der Instanz 2 verschlüsselt durchgeführt. So kann sichergestellt werden, dass weitere in der Nähe angeordnete Ladestationen die Kommunikation nicht mehr entschlüsseln können.

Vorzugsweise ist das Elektrofahrzeug 1 und/oder die Ladestation 3 ausgestaltet, das Elektrofahrzeug 1 induktiv und/oder kabelgebunden zu laden. Vorteilhafte Ausführungsformen der Erfindung werden dann eingesetzt, wenn zwischen dem Elektrofahrzeug 1 und der Ladeinfrastruktur 7 keine kabelgebundene Kommunikation möglich ist, d.h. wenn also das Elektrofahrzeug 1 sich mittels Funk mit der Ladestation 3 oder der Instanz 2 kommuniziert.

Gemäß bevorzugten Ausführungsformen umfasst das Schlüsselaustauschprotokoll P einen Diffie-Hellman-Schlüsselaustausch.

Gemäß bevorzugten Ausführungsformen wird eine eindeutige Ladestation-Kennung über eine zusätzliche Kommunikationsstrecke 8a von der Ladestation 3 zum Elektrofahrzeug 1 und/oder eine eindeutige Elektrofahrzeug-Kennung über eine zusätzliche Kommunikationsstrecke vom Elektrofahrzeug 1 zu der Ladestation 3 übertragen. Dazu umfasst das Elektrofahrzeug 1 vorzugsweise eine zusätzliche fahrzeugseitige Schnittstelle 6a zum empfangen der eindeutigen Ladestation-Kennung und/oder zum Versenden der eindeutigen Elektrofahrzeug-Kennung. Ebenso umfasst die Ladeinfrastruktur 7 dazu vorzugsweise eine zusätzliche infrastrukturseitige Schnittstelle 6 zum Versenden einer eindeutigen Ladestation-Kennung und/oder zum Empfangen einer eindeutigen Elektrofahrzeug-Kennung. Gemäß weiteren bevorzugten Ausführungsformen ist die zusätzliche Kommunikationsstrecke 8a drahtlos und basiert vorzugsweise auf Induktion. Eine drahtlose Kommunikationsstrecke kann beispielsweise auch mittels WLAN unter dem Fahrzeug ausgeführt sein, also als Funkstrecke unter dem Fahrzeug basierend auf IEEE 802.11p,a,h usw.

Gemäß bevorzugten Ausführungsformen umfasst die Ladeinfrastruktur 7 weitere Ladestationen 3a, 3b, welche durch die kontrollierende Einheit 2 kontrollierbar sind. Dabei wird der Datenaustausch 8 zwischen dem Elektrofahrzeug 1 und der kontrollierenden Instanz 2 mittels welchem das gemeinsame Geheimnis K erzeugt wird zumindest teilweise über eine Nahbereichskommunikation zwischen dem Elektrofahrzeug 1 und einer bei der Ladestation 3 angeordneten und vorzugsweise durch die Ladestation 3 umfassten Kommunikationseinheit 4 abgewickelt. Die Nahbereichskommunikation ist so ausgestaltet, dass erkennbar ist, wenn das Elektrofahrzeug 1 sich an einer Position befindet, an welcher sich das Elektrofahrzeug 1 durch die Ladestation 3 laden lässt. Dazu ist das fahrzeugseitige Kommunikationssystem 4a vorzugsweise ausgestaltet, den Datenaustausch 8 mittels welchem das gemeinsame Geheimnis K erzeugt wird zumindest teilweise über die Nahbereichskommunikation zwischen dem Elektrofahrzeug 1 und der Kommunikationseinheit 4 abzuwickeln. Dies geht in Richtung einer Kolokalisierung, wie in der deutschen Patentanmeldung DE 102013212736.7 beschrieben. D.h. wenn die in Reichweite und Sichtbarkeit eingeschränkte Kommunikationseinheit so innerhalb der Ladeinfrastruktur-Seite - innerhalb der Geometrie der Infrastruktur-Seite - verbaut wird, dass die beiden Ursprünge der Geometrien der selbe sind, dann kann garantiert werden, dass wenn die Kommunikation geht, auch die Positionierung des Fahrzeugs ausreichend gut ist.

Gemeinsames Merkmal aller in der Einleitung dieses Dokuments genannten bekannten Verfahren (i), (ii), (iii), (iv) im Bereich induktiv Laden für die Identifizierung und das Pairing von Elektrofahrzeug und Bodeneinheit ist es, dass diese eine (bi- oder unidirektionale) Kommunikationsbeziehung über eine kurze Distanz (Nahbereichskommunikation) herstellen. Bevorzugte Ausführungsformen der Erfindung und insbesondere im Folgenden beschriebene Verfahren können mit allen genannten Kommunikationsverfahren kombiniert werden, sollen jedoch bevorzugt mit dem Verfahren zu (iv) genutzt werden.

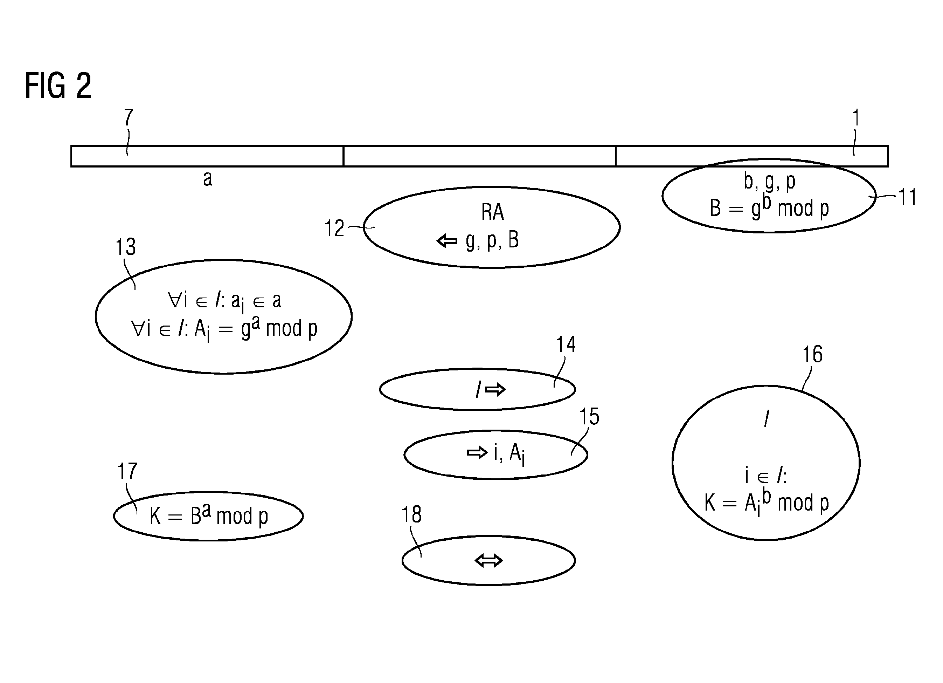

Gemäß bevorzugten Ausführungsformen der Erfindung soll für den weiteren Ablauf prinzipiell das Schlüsselaustauschverfahren von Diffie und Hellman genutzt werden. Der Ablauf ist anhand von Figur 2 beispielhaft dargestellt.

Figur 2 zeigt den Kommunikationsablauf zwischen einer Ladeinfrastruktur 7 eines Ladepunktbetreibers und einem Elektrofahrzeug 1. Die Ladeinfrastruktur 7 umfasst die kontrollierende Instanz 2 und Ladestationen 3, 3a, 3b, welche durch die Instanz 2 kontrolliert werden. Selbstverständlich kann auch jede Ladestation ihre eigene kontrollierende Instanz umfassen, z.B. wenn die Ladeplätze unterschiedlicher Hersteller nebeneinander liegen. In diesem Fall umfasst eine Ladeinfrastruktur eine kontrollierende Instanz und eine Ladestation. Das Fahrzeug 1 umfasst das lokale Geheimnis b und die Ladeinfrastruktur 7 umfasst eine Menge lokaler Geheimnisse a.

Der Assoziierungs-Prozess soll in der Anfahrtsphase des Fahrzeuges 1 aktiviert werden. Während dieser Phase kann das Fahrzeug 1 gegenüber der Ladeinfrastruktur 7 einen Reservierungswunsch RA äußern, d.h. eine Ladestation 3 der verfügbaren Ladestationen 3, 3a, 3b zu seiner späteren Verwendung fest oder frei wählbar buchen. Dazu generiert das Fahrzeug in einem Verfahrensschritt 11 die Primzahlen g und p sowie ein Ergebnis B, welches das Elektrofahrzeug 1 aus seinem lokalen Geheimnis b berechnet.

Neben der hier nicht beschriebenen, spezifischen Reservierungsanfrage RA überträgt das Fahrzeug 1 in einer Nachricht 12 die Primzahlen g und p sowie das Ergebnis B an die Instanz 2. Zur Übertragung wird ein Funkverfahren verwendet, das größere Reichweiten erlaubt, z.B. 3G, IEEE 802.11p, Bluetooth, etc.

Die Ladeinfrastruktur 7 wird dem Fahrzeug 1 in der Folge im Rahmen einer Reservierung 13 der Ladepunkte i eine Menge I möglicher Ladestationen i zuweisen und dem Fahrzeug 1 diese Ladestationen i in einer Reservierungsbestätigung 14 mitteilen. Über eine geeignete Schnittstelle kann das Fahrzeug 1 in der Folge den Fahrer zu einer Ladestation 3 dieser Ladestationen i führen.

Außerdem generiert die Ladeinfrastruktur 7 für jede mögliche Ladestation i ein lokales Geheimnis ai sowie das zugehörige Ergebnis Ai. Jede mögliche Ladestation i strahlt nun im Rahmen des Verfahrensschrittes 15 mittels der Nahbereichskommunikation das ihm zugeordnete Ergebnis Ai aus. Die eindeutige spätere Zuordnung zwischen Ladestation und Fahrzeug ergibt sich durch die eindeutige Wahl von ai.

Nähert sich nun das Elektrofahrzeug 1 der Ladestation i, empfängt es über die Nahbereichskommunikation das Ergebnis Ai der Ladestation i sowie dessen Identifikation. Nähert sich nun das Elektrofahrzeug 1 also beispielsweise der Ladestation 3, so empfängt es über die Nahbereichskommunikation das Ergebnis der Ladestation 3 sowie dessen Identifikation. Mit dieser Information kann das Elektrofahrzeug 1 im Rahmen des Verfahrensschrittes 16 den gemeinsamen Schlüssel K berechnen. Vorzugsweise läuft die Kommunikation jedoch in umgekehrter Richtung, sodass das Elektrofahrzeug zur Ladeinfrastruktur sendet. Diese Variante hat den Vorteil, dass es für die Entwickler etwas leichter ist und die Komplexität reduziert.

Ebenso kann die Ladeinfrastruktur 7 im Rahmen eines Verfahrensschrittes 17 den gemeinsamen Schlüssel K berechnen. In der Folge kann eine 1-zu-1 Kommunikationsbeziehung 18 zwischen Elektrofahrzeug 1 und Ladeinfrastruktur 7 aufgebaut werden. Die Wahl des Mediums für die folgende Kommunikation 18 ist dabei unerheblich, diese kann sowohl über die Nahbereichskommunikation wie auch über die Weitbereichskommunikation abgewickelt werden.

Mit Einsatz des Diffie-Hellman-Protokolls kann gemäß bevorzugten Ausführungsformen der Erfindung mittels zwei einfacher Nachrichten, wobei jeweils eine Nachricht in jede Richtung versendet wird, dynamisch eine Verschlüsselung zwischen zwei Kommunikationspartnern definiert werden, bei der zum einen beide Kommunikationspartner und zum anderen damit eine sichere aus praktischer Sicht als nicht lösbare Kommunikationsverschlüsselung z.B. für eine Ladeprozess-Steuerung gewährleistet werden kann. Keinerlei Vorkenntnisse - keine Vorabinformationen - kann beispielsweise bedeuten, dass keine öffentlichen Schlüssel für den jeweiligen Kommunikationspartner auf der jeweils anderen Seite notwendig sind, und damit auch keine Schlüsselverwaltung notwendig ist.

Bevorzugte Ausführungsformen der Erfindung lösen das Problem der eindeutigen Zuordnung zwischen einer als Ladeplatz ausgestalteten Ladestation und einem Elektrofahrzeug, z.B. beim induktiven Laden, aber auch für die Fälle, dass ein Fahrzeug aus mehreren Ladeplätzen frei auswählen kann und/oder ein Ladeplatz für mehrere Fahrzeuge reserviert ist.

Bevorzugte Ausführungsformen der Erfindung ermöglichen die sichere und eindeutige Zuordnung zwischen Ladeplatz und Fahrzeug, unter der Voraussetzung, dass ein Kommunikationsmedium mit hoher sowie eines mit niedriger Reichweite zur Verfügung stehen.
- Durch den Ablauf der Kommunikation ergibt sich gemäß bevorzugten Ausführungsformen der Erfindung ausschließlich während der Assoziierungs-Phase die Notwendigkeit, einmalig und unidirektional Information vom Ladeplatz zum Fahrzeug über ein Medium kurzer Reichweite zu übertragen (i, Ai). Das bedeutet, dass für die folgende Kommunikationsphase eine sichere und authentifizierte Kommunikationsbeziehung zwischen Ladeplatz und Fahrzeug hergestellt wird, die über jedes beliebige Medium abgewickelt werden kann. Steht also beispielsweise während der Energieübertragung die Nahbereichskommunikation nicht zur Verfügung, so kann auf den Weitbereichsfunk ausgewichen werden.
- Konsequenterweise könnte gemäß bevorzugten Ausführungsformen der Erfindung das Verfahren auch für Lade-, Positionierungs- und Assoziierung-Szenarien angewandt werden, die über das beschriebene Szenario hinausgehen. Ein weiterer Anwendungsfall wäre die Assoziierung bei einem Verfahren, das Positionierung über Ultraschall benutzt: kann während der Positionierung das Tupel (i, Ai) vom Ladeplatz zum Elektrofahrzeug übertragen werden, beispielsweise durch Modulation des Tastverhältnisses des Ultraschallsignals, so kann nachgeordnet eine sichere und assoziierte Kommunikation über ein beliebiges Funkmedium wie z.B. WLAN etabliert werden.

Die Richtung des Informationsflusses lässt sich gemäß bevorzugten Ausführungsformen der Erfindung auch umkehren. So könnte das Fahrzeug seine Parameter g, p und Bi auch über das Medium kurzer Reichweite übertragen und dann auf eine Antwort des Ladeplatzes über das Medium mit hoher Reichweite erwarten. Die Reservierungsanfrage und die Reservierungsbestätigung, sowie die Übertragung der Kennung des Ladeplatzes i, I entfällt dann in diesem Fall.

Aufgrund der eindeutigen 1-zu-1 Kommunikationsbeziehung zwischen Fahrzeug und Ladeplatz, basierend z.B. auf einem dynamischen Verschlüsselungsverfahren, kann gemäß bevorzugten Ausführungsformen der Erfindung während der folgenden Kommunikationsphase ein "Fremdsprechen" mit einem anderen Ladeplatz in der näheren Umgebung (z.B. während eines aktiven Ladevorgangs) gänzlich ausgeschlossen werden. Zwei nicht miteinander assoziierte Kommunikationspartner "verstehen" sich nach Austausch der entsprechenden Schlüsselinformationen nicht mehr und können daran erkennen, dass eine falsche Kommunikations-Verbindung besteht.

Das hier aufgezeigte Verfahren ist nicht auf ein bestimmtes (Funk-basierte) Übertragungssystem festgelegt, es kann mit jeglicher Übertragungstechnologie verknüpft werden. Denkbar sind z.B. auch Ultraschall-basierte Systeme, wie sie heute z.B. in der Automobil-Technik eingesetzt werden. Einzige Voraussetzung gemäß bevorzugten Ausführungsformen der Erfindung: es muss die Möglichkeit der Übertragung von Informationen/Daten zwischen den beiden Kommunikationspartner geben auf der jeweils zu überwindenden Funkstrecke.

## Patentansprüche

1. Verfahren zum Erzeugen eines gemeinsamen Geheimnisses (K) zwischen einem Elektrofahrzeug (1) und einer kontrollierenden Instanz (2) einer zum Aufladen des Elektrofahrzeugs (1) ausgestalteten Ladestation (3),
wobei das gemeinsame Geheimnis (K) mittels eines Datenaustauschs (8) zwischen dem Elektrofahrzeug (1) und der kontrollierenden Instanz (2) mittels eines Schlüsselaustauschprotokolls (P) erzeugt wird, wobei das Schlüsselaustauschprotokolls (P) kein weiteres gemeinsames Geheimnis zur Erzeugung des gemeinsamen Geheimnisses (K) voraussetzt.

2. Verfahren nach Anspruch 1, wobei mittels des gemeinsamen Geheimnisses (K) eine eindeutige Zuordnung zwischen dem Elektrofahrzeug (1) und der Ladestation (3) sichergestellt wird.

3. Verfahren nach einem der vorhergehenden Ansprüche, wobei das Elektrofahrzeug (1) und die Ladestation (3) ausgestaltet sind, das Elektrofahrzeug (1) induktiv und/oder kabelgebunden zu laden.

4. Verfahren nach einem der vorhergehenden Ansprüche, wobei das Schlüsselaustauschprotokoll (P) einen Diffie-Hellman-Schlüsselaustausch umfasst.

5. Verfahren nach einem der vorhergehenden Ansprüche, wobei eine eindeutige Ladestation-Kennung über eine zusätzliche Kommunikationsstrecke (8a) von der Ladestation (3) zum Elektrofahrzeug (1) und/oder eine eindeutige Elektrofahrzeug-Kennung über eine zusätzliche Kommunikationsstrecke vom Elektrofahrzeug (1) zu der Ladestation (3) übertragen wird.

6. Verfahren nach Anspruch 5, wobei die zusätzliche Kommunikationsstrecke (8a) drahtlos ist und/oder auf Induktion basiert.

7. Verfahren nach einem der vorhergehenden Ansprüche, wobei durch die kontrollierende Einheit (2) weitere Ladestationen (3a, 3b) kontrollierbar sind, und wobei der Datenaustausch (8) zwischen dem Elektrofahrzeug (1) und der kontrollierenden Instanz (2) mittels welchem das gemeinsame Geheimnis (K) erzeugt wird zumindest teilweise über eine Nahbereichskommunikation zwischen dem Elektrofahrzeug (1) und einer bei der Ladestation (3) angeordneten Kommunikationseinheit (4) abgewickelt wird, und wobei die Nahbereichskommunikation so ausgestaltet ist, dass erkennbar ist, wenn das Elektrofahrzeug (1) sich an einer Position befindet, an welcher sich das Elektrofahrzeug (1) durch die Ladestation (3) laden lässt.

8. Elektrofahrzeug (1) umfassend ein Kommunikationssystem (4a) mit einer fahrzeugseitigen Schnittstelle (5a) für einen Datenaustausch (8) mit einer kontrollierenden Instanz (2) einer zum Aufladen des Elektrofahrzeugs (1) ausgestalteten Ladestation (3), wobei das Kommunikationssystem (4a) ein Schlüsselaustauschprotokoll (P) zum Erzeugen eines gemeinsamen Geheimnisses (K) mit einer externen kontrollierenden Instanz (2) umfasst, wobei das Schlüsselaustauschprotokoll (P) so ausgestaltet ist, dass es kein weiteres gemeinsames Geheimnis zur Erzeugung des gemeinsamen Geheimnisses (K) voraussetzt.

9. Elektrofahrzeug (1) nach Anspruch 8, wobei mittels des gemeinsamen Geheimnisses (K) eine eindeutige Zuordnung zwischen dem Elektrofahrzeug (1) und der Ladestation (3) sicherstellbar ist.

10. Elektrofahrzeug (1) nach Anspruch 8 oder 9, wobei das Elektrofahrzeug (1) ausgestaltet sind, das Elektrofahrzeug (1) induktiv und/oder kabelgebunden zu laden.

11. Elektrofahrzeug (1) nach einem der Ansprüche 8 bis 10, wobei das Schlüsselaustauschprotokoll (P) einen Diffie-Hellman-Schlüsselaustausch umfasst.

12. Elektrofahrzeug (1) nach einem der Ansprüche 8 bis 11, umfassend eine zusätzliche fahrzeugseitige Schnittstelle (6a) für eine zusätzliche Kommunikationsstrecke (8a), wobei eine eindeutige Ladestation-Kennung durch die zusätzliche fahrzeugseitige Schnittstelle (6a) empfangbar ist und/oder eine eindeutige Elektrofahrzeug-Kennung von der zusätzlichen fahrzeugseitigen Schnittstelle (6a) absendbar ist.

13. Elektrofahrzeug (1) nach Anspruch 12, wobei die zusätzliche Kommunikationsstrecke (8a) drahtlos ist und/oder auf Induktion basiert.

14. Elektrofahrzeug (1) nach einem der Ansprüche 8 bis 13, wobei das Kommunikationssystem (4a) ausgestaltet ist, den Datenaustausch (8) zwischen dem Elektrofahrzeug (1) und der kontrollierenden Instanz (2) mittels welchem das gemeinsame Geheimnis (K) erzeugt wird zumindest teilweise über eine Nahbereichskommunikation zwischen dem Elektrofahrzeug (1) und einer bei der Ladestation (3) angeordneten Kommunikationseinheit (4) abzuwickeln, und wobei die Nahbereichskommunikation so ausgestaltet ist, dass erkennbar ist, wenn das Elektrofahrzeug (1) sich an einer Position befindet, an welcher sich das Elektrofahrzeug (1) durch die Ladestation (3) laden lässt.

15. Ladeinfrastruktur (7) umfassend eine Ladestation (3) zum Aufladen eines Elektrofahrzeugs (1) und eine kontrollierende Instanz (2) der Ladestation (3), wobei die kontrollierende Instanz (2) eine infrastrukturseitige Schnittstelle (5) und ein Schlüsselaustauschprotokoll (P) zum Erzeugen eines gemeinsamen Geheimnisses (K) mit dem Elektrofahrzeug (1) umfasst, wobei das Schlüsselaustauschprotokoll (P) so ausgestaltet ist, dass es kein weiteres gemeinsames Geheimnis zur Erzeugung des gemeinsamen Geheimnisses (K) voraussetzt.

16. Ladeinfrastruktur (7) nach Anspruch 15, wobei mittels des gemeinsamen Geheimnisses (K) eine eindeutige Zuordnung zwischen dem Elektrofahrzeug (1) und der Ladestation (3) sichergestellt wird.

17. Ladeinfrastruktur (7) nach Anspruch 15 oder 16, wobei die Ladestation (3) ausgestaltet ist, Elektrofahrzeuge (1) induktiv und/oder kabelgebunden zu laden.

18. Ladeinfrastruktur (7) nach einem der Ansprüche 15 bis 17, wobei das Schlüsselaustauschprotokoll (P) einen Diffie-Hellman-Schlüsselaustausch umfasst.

19. Ladeinfrastruktur (7) nach einem der Ansprüche 15 bis 18, umfassend eine zusätzliche infrastrukturseitige Schnittstelle (6) für eine zusätzliche Kommunikationsstrecke (8a) von der Ladestation (3) zum Elektrofahrzeug (1), wobei eine eindeutige Ladestation-Kennung über die zusätzliche infrastrukturseitige Schnittstelle (6) zum Elektrofahrzeug (1) versendbar und/oder eine eindeutige Elektrofahrzeug-Kennung durch die zusätzliche infrastrukturseitige Schnittstelle (6) vom Elektrofahrzeug empfangbar ist.

20. Ladeinfrastruktur (7) nach Anspruch 19, wobei die zusätzliche Kommunikationsstrecke (8a) drahtlos ist und/oder auf Induktion basiert.

21. Ladeinfrastruktur (7) nach einem der Ansprüche 15 bis 20, umfassend eine bei der Ladestation (3) angeordnete Kommunikationseinheit (4) und weitere Ladestationen (3a, 3b) welche durch die kontrollierende Einheit (2) kontrollierbar sind, wobei die Ladeinfrastruktur (7) ausgestaltet ist, den Datenaustausch (8) zwischen dem Elektrofahrzeug (1) und der kontrollierenden Instanz (2) mittels welchem das gemeinsame Geheimnis (K) erzeugt wird zumindest teilweise über eine Nahbereichskommunikation zwischen dem Elektrofahrzeug (1) und der Kommunikationseinheit (4) abzuwickeln, und wobei die Nahbereichskommunikation so ausgestaltet ist, dass erkennbar ist, wenn das Elektrofahrzeug (1) sich an einer Position befindet, an welcher sich das Elektrofahrzeug (1) durch die Ladestation (3) laden lässt.

22. System (99) zum Erzeugen eines gemeinsamen Geheimnisses (K) zwischen einem Elektrofahrzeug (1) und einer kontrollierenden Instanz (2) einer zum Aufladen des Elektrofahrzeugs (1) ausgestalteten Ladestation (3), das System (99) umfassend eine Ladeinfrastruktur (7) nach einem der Ansprüche 15-21 und ein Elektrofahrzeug nach einem der Ansprüche 8-14.
